# EUROPEAN PATENT APPLICATION

(11) **EP 4 778 741 A1**
(43) Date of publication of application: **22.07.2026**
(21) Application number: 26151808.8
(22) Date of filing: 14.01.2026
(51) Int. Cl.: B60C 19/00, B60C 23/04, B60C 11/24

(54) **TIRE MONITORING DEVICE**

(30) Priority: 16.01.2025 US 202519025316
(71) Applicant: Fruchter, Monique, New York, NY 10002 (US); Shabatian, Joseph, Los Angeles, California 90036 (US); Shabatian, Jason, Hollywood, Florida 33021 (US)
(72) Inventor: Fruchter, Monique, New York, NY 10002 (US); Shabatian, Joseph, Los Angeles, California 90036 (US); Shabatian, Jason, Hollywood, Florida 33021 (US)
(74) Representative: Abel & Imray LLP

(57) **Abstract**

A tire monitoring device is disclosed, which detects potential hazards, such as debris, nails, and obstructions that could lead to tire damage or failure. The tire monitoring device comprises at least one embedded sensor positioned within the wheel well of a vehicle. The sensors are connected to an internal display panel positioned within a vehicle, such that drivers can receive notifications about issues, such as low tire pressure, punctures, and road debris. In one embodiment, the sensors have a thermoset exterior layer which serves the dual purpose of protecting both the vehicle body and the embedded sensors within.

## Description

### CROSS-REFERENCE TO RELATED APPLICATION

The present application claims priority to, and the benefit of, U.S. Provisional Application No. 63/622,309, which was filed on January 18, 2024, and is incorporated herein by reference in its entirety.

### FIELD OF THE INVENTION

The present invention relates generally to the field of tire monitoring devices. More specifically, the present invention relates to a tire monitoring device that improves driver safety by notifying a driver if debris has punctured a vehicle tire. Accordingly, the present disclosure makes specific reference thereto. Nonetheless, it is to be appreciated that aspects of the present invention are also equally applicable to other like applications, devices and methods of manufacture.

### BACKGROUND

By way of background, this invention relates to improvements in tire monitoring devices. Generally, nails or road debris can cause a catastrophic tire failure while driving, potentially leading to accidents and injury. However, a driver is often unaware of the presence of nails or debris in a tire until an accident occurs.

When foreign objects become embedded in a tire, they can cause damage to the tire over time if they are not removed. In some instances, drivers may not be aware that an object has become embedded in a tire. For example, some tires produced today include sealant, which prevents the tires from losing air pressure in the event of a puncture. These tires may include a tire pressure monitoring system, but this system cannot provide puncture warnings to the driver, because the system only detects a change in pressure. Thus, a need exists for detecting foreign objects in a tire that does not rely solely on changes in air pressure.

Accordingly, there is a demand for an improved tire monitoring device that can detect road hazards and tire damage. More particularly, there is a demand for a tire monitoring device that is linked to an internal display panel so the driver can quickly see warnings.

Therefore, there exists a long felt need in the art for a tire monitoring device that provides users with a device that improves driver safety. There is also a long felt need in the art for a tire monitoring device that notifies drivers if debris has punctured a vehicle tire. Further, there is a long felt need in the art for a tire monitoring device that is comprised of embedded sensors within the wheel well of a vehicle. Moreover, there is a long felt need in the art for a device that provides an internal display for alerting the user. Further, there is a long felt need in the art for a tire monitoring device that provides sensors with a thermoset exterior layer. Finally, there is a long felt need in the art for a tire monitoring device that utilizes electromagnetic sensors.

The subject matter disclosed and claimed herein, in one embodiment thereof, comprises a tire monitoring device. The device is a tire monitoring system which detects potential hazards, such as debris, nails, and obstructions that could lead to tire damage or failure. The tire monitoring device comprises at least one embedded sensor positioned within the wheel well of a vehicle. The sensors are connected to an internal display panel positioned within a vehicle, such that drivers can receive notifications about issues, such as low tire pressure, punctures, and road debris. In one embodiment, the sensors have a thermoset exterior layer which serves the dual purpose of protecting both the vehicle body and the embedded sensors within.

In this manner, the tire monitoring device of the present invention accomplishes all of the forgoing objectives and provides users with a device that detects potential road hazards. The device comprises embedded sensors within a vehicle wheel well. The device can utilize different types of sensors.

### SUMMARY OF THE INVENTION

The following presents a simplified summary in order to provide a basic understanding of some aspects of the disclosed innovation. This summary is not an extensive overview, and it is not intended to identify key/critical elements or to delineate the scope thereof. Its sole purpose is to present some general concepts in a simplified form as a prelude to the more detailed description that is presented later.

The subject matter disclosed and claimed herein, in one embodiment thereof, comprises a tire monitoring device. The device is a tire monitoring system which detects potential hazards, such as debris, nails, and obstructions that could lead to tire damage or failure. The tire monitoring device comprises at least one embedded sensor positioned within the wheel well of a vehicle. The sensors are connected to an internal display panel positioned within a vehicle, such that drivers can receive notifications about issues with their vehicle tires.

In one embodiment, the tire monitoring device is designed to give drivers an early warning about road obstructions and tire punctures. The tire monitoring device detects road hazards and tire damage, and instantly warns drivers that something is wrong. Specifically, the device detects a foreign object in a vehicle tire, specifically embedded in the tread of the tire. Foreign objects that can become embedded into the vehicle tire include stones, screws, nails, pieces of metal, bolts, plastic, etc.

In one embodiment, the tire monitoring device comprises at least one embedded sensor which is typically positioned within the wheel well of a vehicle. Typically, there at least three sensors which are embedded into the wheel well, but any suitable number of sensors can be utilized with the tire monitoring device.

In one embodiment, the sensors are long and rectangular in shape and act to span the width of the wheel well. However, the sensors can be any suitable size and shape as is known in the art, depending on the needs and/or wants of a user.

In one embodiment, the three sensors are positioned within a housing. The housing is configured in a curved or arched shape to mirror the size and shape of the wheel well to which it is to be attached. The sensors are embedded directly into the housing. The housing can be manufactured of a thermoplastic or polymer material or any other suitable material as is known in the art. Once embedded, the housing is secured to the interior wheel well of a vehicle via any suitable securing means, such as bolts, screws, rivets, etc.

In one embodiment, the housing comprises a thermoset exterior layer which serves the dual purpose of protecting both the vehicle body and the embedded sensors within. The thermoset layer contains a polymer that is irreversibly hardened by heat, creating a strong, durable exterior layer. The housing would comprise a thermoset exterior layer on the top and bottom of the exterior of the housing, to protect the sensors against damage from mud, fluids, stones, weather, debris, dirt, and other road hazards, etc.

In one embodiment, the sensors are positioned within the wheel wells of all four tires. In another embodiment, the sensors are only positioned within the wheel wells of some of the tires, such as only the front tires, only the rear tires, or only one of the front and one of the rear tires, etc.

In one embodiment, the sensors utilize ultrasonic technology. Thus, when activated, high-frequency signals are fired out from a series of rectangular sensors (usually three) attached to the wheel well of a vehicle. When physical objects or protrusions are detected within a set range, the sensors will alert the driver via a visual and/or audible signal. Manufacturers program the range of these signals within the logic board of the sensors; they can therefore be calibrated so the driver has an indication of where the object or protrusion is.

In one embodiment, the sensor comprises a long, rectangular body, a cover plate, an elastomeric gasket or seal and a signal sensor module. A hollow core runs through the rectangular body to accommodate the elastomeric gasket or seal and the signal sensor module. The signal sensor module emits ultrasonic signals through a through hole in the rectangular body to detect any object within its effective range.

In one embodiment, the sensors are electromagnetic. These sensors comprise a magnetic strip on the inside of the wheel well. Typically, these are considered 'invisible' technology, so they are more aesthetically pleasing. When these sensors are activated, a magnetic field is generated; from this, an elliptical magnetic field is sent out by a control unit. When something enters its range, the voltage in the control unit increases. The rate of this change is converted into a calibrated audible signal, which alerts the driver to the foreign object, such as a nail, screw, bolt, etc.

In one embodiment, all of the sensors within the wheel well are either ultrasonic or electromagnetic. In another embodiment, some of the sensors can be electromagnetic or ultrasonic within the wheel well. For example, only two of the sensors can be electromagnetic and one ultrasonic in the wheel well or vice versa.

In one embodiment, the embedded sensors and housing are installed as an after-market installation. In another embodiment, the embedded sensors and housing are installed during manufacturing.

In one embodiment, an internal display panel is positioned within a vehicle interior. The internal display panel is in communication with the sensors. The internal display panel can be in wired (i.e., hard wired to the vehicle) or wireless communication with the sensors. Thus, whenever the sensors detect a protrusion or foreign object, the detection signal is then transmitted to the internal display panel within the vehicle. The internal display panel can be any suitable shape and size as is known in the art and is typically secured within the vehicle via a clamp, Velcro, suction cup, or directly integrated during manufacturing, etc. The internal display panel comprises a liquid crystal display (LCD) screen which can display warnings and alerts from the sensors and/or includes a speaker for emitting audible sounds or alerts and various control/power buttons. Specifically, via the internal display panel users (i.e., drivers) can receive notifications about issues with their vehicle tires, such as low tire pressure, punctures, protrusions, and road debris, etc. Additionally, or in the alternative, the alert can be sent as a text, visual, or audible alert to a user's cellphone via a direct radio frequency protocol or via a telephone network or wireless communications module, etc., or it can take any number of other forms, depending on the needs and/or wants of a user.

In one embodiment, the tire monitoring device is powered by an internal battery of the vehicle, from multiple dedicated power sources, or from a single dedicated power source.

In yet another embodiment, the tire monitoring device comprises a plurality of indicia.

In accordance with another embodiment of the invention there is provided a method of monitoring vehicle tires for tire punctures. The method includes the steps of providing a tire monitoring device comprising at least one embedded sensor and internal display panel. The method also comprises embedding at least one sensor into the vehicle wheel well. Further, the method comprises connecting the at least one sensor to an internal display panel. The method also comprises detecting tire punctures via the at least one sensor. Finally, the method comprises alerting a user via the internal display panel of the tire punctures.

In accordance with another embodiment of the invention there is provided a tire monitoring device that improves driver safety, the tire monitoring device comprising: three sensors positioned within a housing; and an internal display panel; wherein the housing comprises a thermoset exterior layer which serves a dual purpose of protecting both a vehicle body and the three sensors within; wherein the three sensors and housing are embedded within a wheel well of a vehicle; wherein the three sensors and housing are positioned within the wheel wells of all four tires; wherein the three sensors utilize ultrasonic technology or electromagnetic technology; and further wherein the three sensors are in communication with the internal display panel to communicate notifications about issues with the vehicle's tires to a user.

In one embodiment, two of the three sensors within the wheel well are ultrasonic and one of the three sensors is electromagnetic.

In one embodiment, the internal display panel is in communication with the three sensors via wired or wireless communication.

In one embodiment, the internal display panel displays warnings and alerts from the three sensors on its screen and includes a speaker for emitting audible sounds or alerts.

In one embodiment, the tire monitoring device comprises a plurality of indicia.

Numerous benefits and advantages of this invention will become apparent to those skilled in the art to which it pertains, upon reading and understanding the following detailed specification.

To the accomplishment of the foregoing and related ends, certain illustrative aspects of the disclosed innovation are described herein in connection with the following description and the annexed drawings. These aspects are indicative, however, of but a few of the various ways in which the principles disclosed herein can be employed and are intended to include all such aspects and their equivalents. Other advantages and novel features will become apparent from the following detailed description when considered in conjunction with the drawings.

### BRIEF DESCRIPTION OF THE DRAWINGS

The description refers to provided drawings in which similar reference characters refer to similar parts throughout the different views, and in which:
FIG. 1 illustrates a perspective view of one embodiment of the tire monitoring device of the present invention showing the sensors and internal display panel in accordance with the disclosed architecture;
FIG. 2 illustrates a perspective view of one embodiment of the tire monitoring device of the present invention showing the embedded sensors in accordance with the disclosed architecture;
FIG. 3 illustrates a perspective view of one embodiment of the tire monitoring device of the present invention showing the internal display panel in accordance with the disclosed architecture;
FIG. 4 illustrates a perspective view of one embodiment of the tire monitoring device of the present invention showing the internal display panel warnings in accordance with the disclosed architecture;
FIGS. 5A-C illustrate a perspective view of one embodiment of the tire monitoring device of the present invention showing the device in use in accordance with the disclosed architecture; and
FIG. 6 illustrates a flowchart showing the method of monitoring vehicle tires for tire punctures in accordance with the disclosed architecture.

### DETAILED DESCRIPTION OF THE PRESENT INVENTION

The innovation is now described with reference to the drawings, wherein like reference numerals are used to refer to like elements throughout. In the following description, for purposes of explanation, numerous specific details are set forth in order to provide a thorough understanding thereof. It may be evident, however, that the innovation can be practiced without these specific details. In other instances, well-known structures and devices are shown in block diagram form in order to facilitate a description thereof. Various embodiments are discussed hereinafter. It should be noted that the figures are described only to facilitate the description of the embodiments. They are not intended as an exhaustive description of the invention and do not limit the scope of the invention. Additionally, an illustrated embodiment need not have all the aspects or advantages shown. Thus, in other embodiments, any of the features described herein from different embodiments may be combined.

As noted above, there is a long felt need in the art for a tire monitoring device that provides users with a device that improves driver safety. There is also a long felt need in the art for a tire monitoring device that notifies drivers if debris has punctured a vehicle tire. Further, there is a long felt need in the art for a tire monitoring device that is comprised of embedded sensors within the wheel well of a vehicle. Moreover, there is a long felt need in the art for a device that provides an internal display for alerting the user. Further, there is a long felt need in the art for a tire monitoring device that provides sensors with a thermoset exterior layer. Finally, there is a long felt need in the art for a tire monitoring device that utilizes electromagnetic sensors.

The present invention, in one exemplary embodiment, is a novel tire monitoring device. The tire monitoring device comprises at least one embedded sensor positioned within the wheel well of a vehicle. The sensors are connected to an internal display panel positioned within a vehicle, such that drivers can receive notifications about issues, such as low tire pressure, punctures, and road debris. In one embodiment, the sensors have a thermoset exterior layer which serves the dual purpose of protecting both the vehicle body and the embedded sensors within. The present invention also includes a novel method of monitoring vehicle tires for tire punctures. The method includes the steps of providing a tire monitoring device comprising at least one embedded sensor and internal display panel. The method also comprises embedding at least one sensor into the vehicle wheel well. Further, the method comprises connecting the at least one sensor to an internal display panel. The method also comprises detecting tire punctures via the at least one sensor. Finally, the method comprises alerting a user via the internal display panel of the tire punctures.

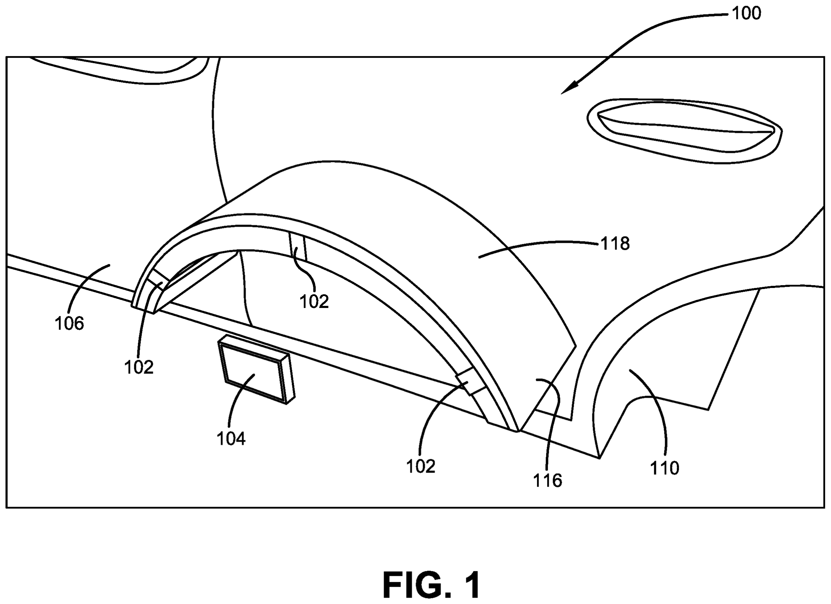

Referring initially to the drawings, FIG. 1 illustrates a perspective view of one embodiment of the tire monitoring device 100 of the present invention. In the present embodiment, the tire monitoring device 100 is an improved tire monitoring device 100 that improves driver safety. Specifically, the tire monitoring device 100 comprises at least one embedded sensor 102 positioned within the wheel well 110 of a vehicle 106. The sensors 102 are connected to an internal display panel 104 positioned within a vehicle 106, such that drivers can receive notifications about issues with their tires 108.

Generally, the tire monitoring device 100 is designed to give drivers an early warning about road obstructions and tire punctures. The tire monitoring device 100 detects road hazards and tire damage, and instantly warns drivers that something is wrong. Specifically, the device 100 detects a foreign object 114 in a vehicle tire 108, specifically embedded in the tread 112 of the tire 108. Foreign objects 114 that can become embedded into the vehicle tire 108 include stones, screws, nails, pieces of metal, bolts, plastic, etc.

Further, the tire monitoring device 100 comprises at least one embedded sensor 102 which is typically positioned within the wheel well 110 of a vehicle 106. Typically, there are at least three sensors 102 which are embedded into the wheel well 110, but any suitable number of sensors 102 can be utilized with the tire monitoring device 100, as is known in the art depending on the needs and/or wants of a user.

Additionally, the sensors 102 are long and rectangular in shape and act to span the width of the wheel well 110. However, the sensors 102 can be any suitable size and shape as is known in the art, depending on the needs and/or wants of a user.

Typically, the three sensors 102 are positioned within a housing 116. The housing 116 is configured in a curved or arched shape to mirror the size and shape of the wheel well 110 to which it is to be attached. The sensors 102 are embedded directly into the housing 116. The housing 116 can be manufactured of a thermoplastic or polymer material or any other suitable material as is known in the art. Once embedded with the sensors 102, the housing 116 is secured to the interior wheel well 110 of a vehicle 106 via any suitable securing means, such as bolts, screws, rivets, etc.

In one embodiment, the housing 116 comprises a thermoset exterior layer 118 which serves the dual purpose of protecting both the vehicle body and the embedded sensors 102 within. The thermoset layer 118 contains a polymer that is irreversibly hardened by heat, creating a strong, durable exterior layer. The housing 116 would comprise a thermoset exterior layer 118 on the top and bottom of the exterior of the housing 116, to protect the sensors 102 against damage from mud, fluids, stones, weather, debris, dirt, and other road hazards, etc.

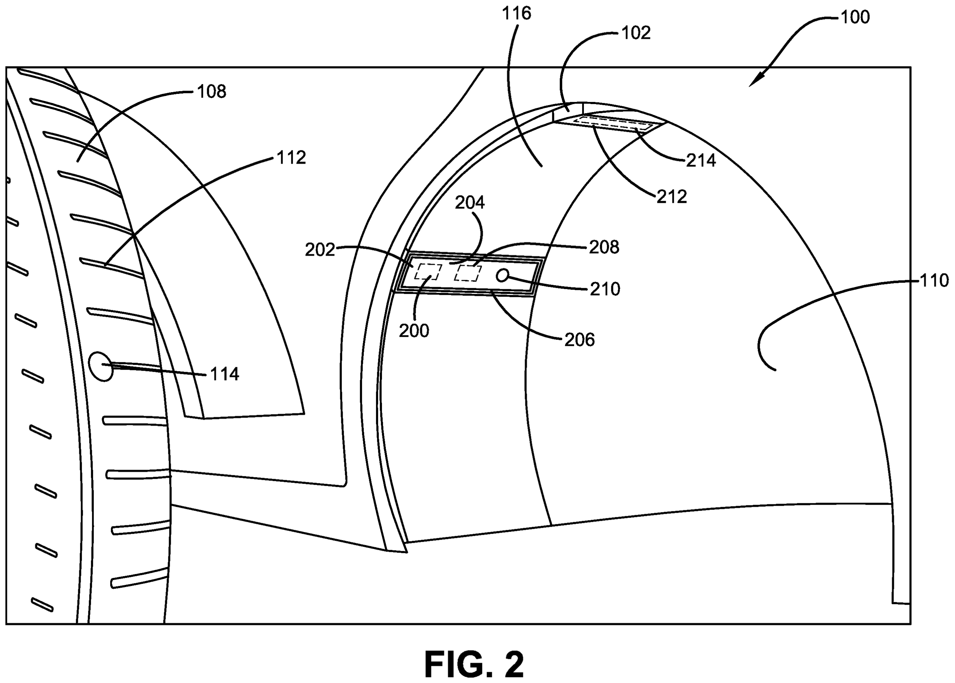

As shown in FIG. 2, the sensors 102 are positioned within the wheel wells 110 of all four tires 108. In another embodiment, the sensors 102 are only positioned within the wheel wells 110 of some of the tires 108, such as only the front tires, only the rear tires, or only one of the front and one of the rear tires, etc.

In one embodiment, the sensors 102 utilize ultrasonic technology. Thus, when activated, high-frequency signals are fired out from a series of rectangular sensors 102 (usually three) attached to the wheel well 110 of a vehicle 106. When physical objects 114 or protrusions are detected within a set range, the sensors 102 will alert the driver via a visual and/or audible signal. Manufacturers program the range of these signals within the logic board 200 of the sensors 102; they can therefore be calibrated so the driver has an indication of where the object 114 or protrusion is.

Typically, the ultrasonic sensors 102 comprises a long, rectangular body 202, a cover plate 204, an elastomeric gasket or seal 206 and a signal sensor module 208. A hollow core 210 runs through the rectangular body 202 to accommodate the elastomeric gasket or seal 206 and the signal sensor module 208. The signal sensor module 208 emits ultrasonic signals through a through hole 210 in the rectangular body 202 to detect any object 114 within its effective range.

In another embodiment, the sensors 102 are electromagnetic. These sensors 102 comprise a magnetic strip 212 on the inside of the wheel well 110. Typically, these are considered 'invisible' technology, so they are more aesthetically pleasing. When these sensors 102 are activated, a magnetic field is generated; from this, an elliptical magnetic field is sent out by a control unit 214. When something enters its range, the voltage in the control unit 214 increases. The rate of this change is converted into a calibrated audible signal, which alerts the driver to the foreign object 114, such as a nail, screw, bolt, etc.

In yet another embodiment, all of the sensors 102 within the wheel well 110 are either ultrasonic or electromagnetic. In another embodiment, some of the sensors 102 can be electromagnetic or ultrasonic within the wheel well 110. For example, only two of the sensors 102 can be electromagnetic and one ultrasonic in the wheel well 110 or vice versa, depending on the wants and/or needs of a user.

In one embodiment, the embedded sensors 102 and housing 116 are installed as an after-market installation. In another embodiment, the embedded sensors 102 and housing 116 are installed during manufacturing.

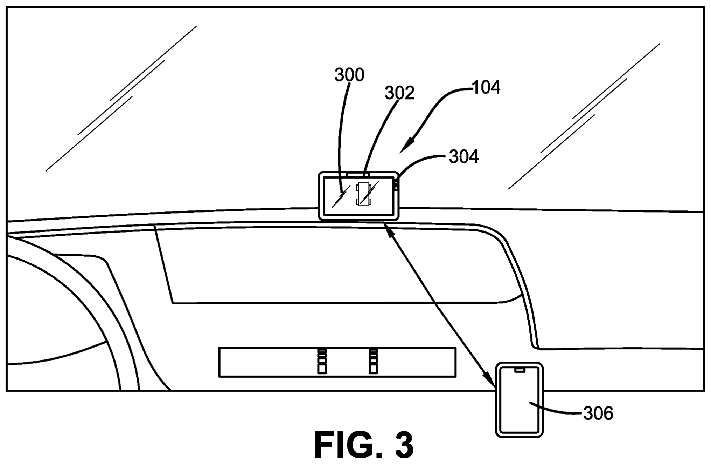

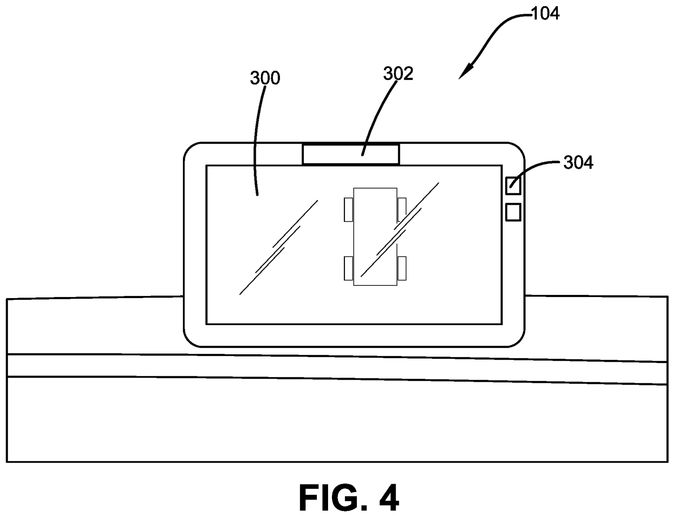

As shown in FIGS. 3-4, an internal display panel 104 is positioned within a vehicle 106 interior. The internal display panel 104 is in communication with the sensors 102. The internal display panel 104 can be in wired (i.e., hard wired to the vehicle 106) or wireless communication with the sensors 102. Thus, whenever the sensors 102 detect a protrusion or foreign object 114, the detection signal is then transmitted to the internal display panel 104 within the vehicle 106. The internal display panel 104 can be any suitable shape and size as is known in the art and is typically secured within the vehicle 106 via a clamp, Velcro, suction cup, or directly integrated during manufacturing, etc. The internal display panel 104 comprises a liquid crystal display (LCD) screen 300 which can display warnings and alerts from the sensors 102 and/or includes a speaker 302 for emitting audible sounds or alerts and various control/power buttons 304. Specifically, via the internal display panel 104 users (i.e., drivers) can receive notifications about issues with their vehicle tires 108, such as low tire pressure, punctures, protrusions, and road debris, etc. Additionally, or in the alternative, the alert can be sent as a text, visual, or audible alert to a user's cellphone 306 via a direct radio frequency protocol or via a telephone network or wireless communications module, etc., or it can take any number of other forms, depending on the needs and/or wants of a user.

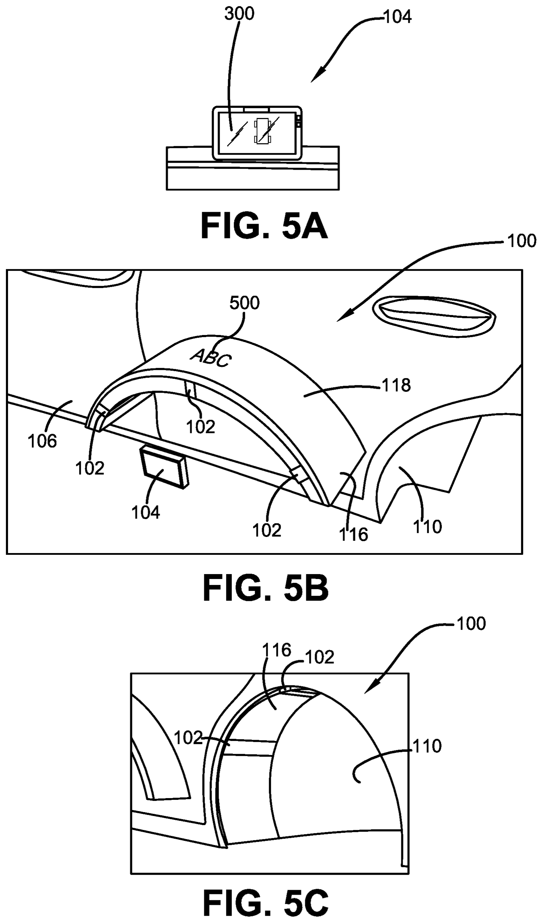

As shown in FIGS. 5A-C, the tire monitoring device 100 is powered by an internal battery of the vehicle 106, from multiple dedicated power sources, or from a single dedicated power source.

In yet another embodiment, the tire monitoring device 100 comprises a plurality of indicia 500. The housing 116 of the device 100 may include advertising, a trademark, or other letters, designs, or characters, printed, painted, stamped, or integrated into the housing 116, or any other indicia 500 as is known in the art. Specifically, any suitable indicia 500 as is known in the art can be included, such as but not limited to, patterns, logos, emblems, images, symbols, designs, letters, words, characters, animals, advertisements, brands, etc., that may or may not be sensor, tire, or brand related.

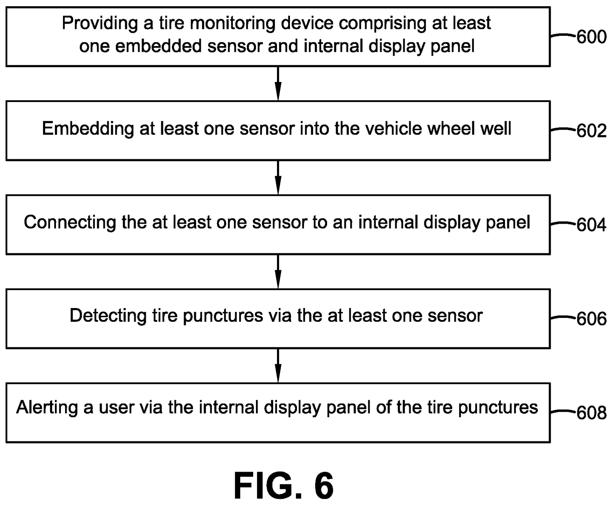

FIG. 6 illustrates a flowchart of the method of monitoring vehicle tires for tire punctures. The method includes the steps of at 600, providing a tire monitoring device comprising at least one embedded sensor and internal display panel. The method also comprises at 602, embedding at least one sensor into the vehicle wheel well. Further, the method comprises at 604, connecting the at least one sensor to an internal display panel. The method also comprises at 606, detecting tire punctures via the at least one sensor. Finally, the method comprises at 608, alerting a user via the internal display panel of the tire punctures.

Certain terms are used throughout the following description and claims to refer to particular features or components. As one skilled in the art will appreciate, different users may refer to the same feature or component by different names. This document does not intend to distinguish between components or features that differ in name but not structure or function. As used herein "tire monitoring device", "monitoring device", and "device" are interchangeable and refer to the tire monitoring device 100 of the present invention.

Notwithstanding the forgoing, the tire monitoring device 100 of the present invention can be of any suitable size and configuration as is known in the art without affecting the overall concept of the invention, provided that it accomplishes the above stated objectives. One of ordinary skill in the art will appreciate that the tire monitoring device 100 as shown in FIGS. 1-6 is for illustrative purposes only, and that many other sizes and shapes of the tire monitoring device 100 are well within the scope of the present disclosure. Although the dimensions of the tire monitoring device 100 are important design parameters for user convenience, the tire monitoring device 100 may be of any size that ensures optimal performance during use and/or that suits the user's needs and/or preferences.

Various modifications and additions can be made to the exemplary embodiments discussed without departing from the scope of the present invention. While the embodiments described above refer to particular features, the scope of this invention also includes embodiments having different combinations of features and embodiments that do not include all of the described features. Accordingly, the scope of the present invention is intended to embrace all such alternatives, modifications, and variations as fall within the scope of the claims, together with all equivalents thereof.

What has been described above includes examples of the claimed subject matter. It is, of course, not possible to describe every conceivable combination of components or methodologies for purposes of describing the claimed subject matter, but one of ordinary skill in the art may recognize that many further combinations and permutations of the claimed subject matter are possible. Accordingly, the claimed subject matter is intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. A tire monitoring device that improves driver safety, the tire monitoring device comprising:
at least one sensor; and
an internal display panel;
wherein the at least one sensor is embedded within a wheel well of a vehicle; and
further wherein the at least one sensor is in communication with the internal display panel to communicate notifications about issues with the vehicle's tires to a user.

2. The tire monitoring device of claim 1, wherein the at least one sensor detects protrusions and foreign objects in a vehicle tire, such as stones, screws, nails, pieces of metal, bolts, or plastic.

3. The tire monitoring device of claim 2, wherein there are three sensors which are embedded into the wheel well.

4. The tire monitoring device of claim 3, wherein the three sensors are long and rectangular in shape and act to span a width of the wheel well.

5. The tire monitoring device of claim 4, wherein the three sensors are positioned within a housing.

6. The tire monitoring device of claim 5, wherein the housing is configured in a curved shape to mirror size and shape of the wheel well to which it is to be attached.

7. The tire monitoring device of claim 6, wherein the housing can be manufactured of a thermoplastic or polymer material.

8. The tire monitoring device of claim 7, wherein once embedded with the three sensors, the housing is secured to an interior wheel well of a vehicle via bolts, screws, or rivets.

9. The tire monitoring device of claim 8, wherein the housing comprises a thermoset exterior layer which serves a dual purpose of protecting both a vehicle body and the three sensors within.

10. The tire monitoring device of claim 9, wherein the three sensors and housing are positioned within the wheel wells of all four tires.

11. The tire monitoring device of claim 10, wherein the three sensors utilize ultrasonic technology.

12. The tire monitoring device of claim 11, wherein each of the three sensors comprise a rectangular body, a cover plate, an elastomeric gasket or seal and a signal sensor module, which emits ultrasonic signals to detect a protrusion or a foreign object.

13. The tire monitoring device of claim 10, wherein the three sensors are electromagnetic.

14. The tire monitoring device of clam 13, wherein the three sensors comprise a magnetic strip to activate a magnetic field.

15. A method of monitoring vehicle tires for tire punctures, the method comprising the following steps:
providing a tire monitoring device comprising at least one embedded sensor and internal display panel;
embedding at least one sensor into the vehicle wheel well;
connecting the at least one sensor to an internal display panel;
detecting tire punctures via the at least one sensor; and
alerting a user via the internal display panel of the tire punctures.
